# EUROPEAN PATENT APPLICATION

(11) **EP 4 183 517 A1**
(43) Date of publication of application: **24.05.2023**
(21) Application number: 20949511.8
(22) Date of filing: 12.08.2020
(51) Int. Cl.: B23Q 11/10

(54) **COOLANT TANK**

(71) Applicant: DMG Mori Co., Ltd., Yamatokoriyama-shi, Nara 639-1160 (JP)
(72) Inventor: YAMAMOTO, Kosuke, Yamatokoriyama-shi, Nara 639-1160 (JP); KANAZAWA, Junichi, Yamatokoriyama-shi, Nara 639-1160 (JP); OKAWARA, Yasuhito, Yamatokoriyama-shi, Nara 639-1160 (JP)
(74) Representative: Isarpatent
(86) International application number: PCT/JP2020/030659
(87) International publication number: WO 2022/034649

(57) **Abstract**

A coolant tank (15) has a bottom (16) and a tubular side wall (17) extending upright from an outer peripheral edge of the bottom (16). The side wall (17) has a plurality of outwardly protruding protrusions (18a, 18b, 18c, and 18d) formed thereon at predetermined intervals in the vertical direction. Providing the protrusions (18a, 18b, 18c, and 18d) increases the surface area of the side wall (17), whereby heat exchange with outside air is facilitated so that a coolant in the tank (15) is cooled down efficiently.

## Description

### Technical Field

0001 The present invention relates to a coolant tank for storing a coolant to be supplied to a machine tool or the like.

### Background Art

0002 In the field of machine tools, a coolant is conventionally ejected toward a tool and a workpiece in machining so that machining heat (cutting heat, grinding heat, or the like) generated by the machining is cooled down by the coolant. A known typical tank for storing such a coolant is a coolant tank disclosed in Japanese Unexamined Patent Application Publication No. 2018-79522 (Patent Literature 1).

0003 The disclosed coolant tank is composed of a rectangular container having an open top. This coolant tank is arranged beside a machine tool to connect to a circulation unit provided in the machine tool. The coolant in the coolant tank is pumped up by an appropriate supply pump and supplied into the machine tool. The supplied coolant is returned into the coolant tank through the circulation unit and the open top of the coolant tank.

### Citation List

### Patent Literature

0004 Patent Literature 1: Japanese Unexamined Patent Application Publication No. 2018-79522

### Summary of Invention

### Technical Problem

0005 As described above, a coolant in the filed of machine tools is used mainly in order to cool down machining heat generated by machining. Accordingly, such a coolant is heated up through heat exchange when cooling down the machining heat. When such a heated coolant flows in a flow path provided in the machine tool, heat exchange takes place between the coolant and the machine tool, which results in the machine tool being heated up. The heated machine tool leads to a problem that structural thermal deformation occurs in the machine tool and such thermal deformation deteriorates machining accuracy.

0006 In order to prevent such deterioration of machining accuracy, the coolant stored in the coolant tank needs to be cooled down appropriately. However, cooling down the coolant using a known cooling device such as a chiller needs additional energy, such as electricity, which is contrary to energy saving that is desired in term of environment or manufacturing cost.

0007 The present invention has been achieved in view of the above-described circumstances and an object of the invention is to provide a coolant tank which is able to cool down a stored coolant without using a large amount of energy.

### Solution to Problem

0008 To solve the above-described problem, the present invention provides a coolant tank for storing a coolant, having:
a bottom; and
a tubular side wall extending upright from an outer peripheral edge of the bottom,
   wherein the side wall has a plurality of outwardly protruding protrusions formed thereon at predetermined intervals in the vertical direction.

0009 In the coolant tank according to this aspect (first aspect), the side wall has a plurality of outwardly protruding protrusions formed thereon at predetermined intervals in the vertical direction. Therefore, the side wall has a surface area increased by the formation of the protrusions as compared to a conventional coolant tank which has no protrusion formed thereon.

0010 Therefore, heat exchange between the coolant stored in this coolant tank and the atmosphere through the side wall of the coolant tank is facilitated as compared to the conventional coolant tank. Consequently, the coolant in this coolant tank reaches a lower temperature than that in the conventional coolant tank.

0011 For example, when this coolant tank is provided for a machine tool to supply a coolant into the machine tool, the coolant is heated up by machining heat; however, the heated coolant is cooled down in the coolant tank to reach a temperature lower than that in the case of using the conventional coolant tank. Consequently, occurrence of thermal deformation in the machine tool due to such a heated coolant is suppressed as compared to the case of using the conventional coolant tank.

0012 The coolant tank according to the first aspect may be configured according to the following aspect: the protrusions are annularly formed along the circumferential direction of the side wall. According to this aspect (second aspect), the side wall has a more increased surface area, so that the coolant in this coolant tank is cooled down to reach an even lower temperature.

0013 The present invention further provides a coolant tank for storing a coolant, having:
a bottom; and
a tubular side wall extending upright from an outer peripheral edge of the bottom,
   wherein the side wall has a plurality of outwardly protruding protrusions formed thereon at predetermined intervals in the circumferential direction.

0014 In the coolant tank according to this aspect (third aspect), the side wall has a plurality of outwardly protruding protrusions formed thereon at predetermined intervals in the circumferential direction. Therefore, similarly to the coolant tank according to the first aspect, the side wall has a surface area increased by the formation of the protrusions as compared to a conventional coolant tank which has no protrusion formed thereon.

0015 Therefore, heat exchange between the coolant stored in this coolant tank and the atmosphere through the side wall of the coolant tank is facilitated as compared to the conventional coolant tank. Consequently, the coolant in this coolant tank reaches a lower temperature than that in the conventional coolant tank.

0016 For example, also when the coolant tank according to the third aspect is provided for a machine tool to supply a coolant into the machine tool, the coolant is heated up by machining heat; however, the heated coolant is cooled down in the coolant tank to reach a temperature lower than that in the case of suing the conventional coolant tank. Consequently, occurrence of thermal deformation in the machine tool due to such a heated coolant is suppressed as compared to the case of using the conventional coolant tank.

0017 The coolant tank according to the third aspect may be configured according to the following aspect: the protrusions are formed in a stripe pattern along the vertical direction. According to this aspect (fourth aspect), the side wall has a more increased surface area, so that the coolant in this coolant tank is cooled down to reach an even lower temperature.

0018 Each of the coolant tanks according to the first through fourth aspects may be configured to the following aspect:
the side wall has at an upper edge thereof a hollow conduit formed along a peripheral edge of the upper edge and has between an inner peripheral surface thereof and a bottom portion of the conduit an opening formed continuously or intermittently along the circumferential direction of the side wall; and
the upper edge has a pouring port formed therein leading to the conduit.

0019 With the coolant tank according to this aspect (fifth aspect), the coolant can be returned into the coolant tank through the pouring port formed in the upper edge. The coolant returned flows into the hollow conduit through the pouring port and then flows downward through the opening formed at the bottom portion of the conduit while flowing in the conduit. In this process, the coolant flows down along the inner surface of the side wall. The coolant is cooled down in the course of flowing down, and simultaneously serves to wash off machining chips and sludge adhering to the inner surface of the side wall.

0020 Each of the coolant tanks according to the first through fifth aspects may be configured to the following aspect: the bottom has a recess formed therein and the recess has a discharge port formed therein connected to a pump. In the coolant tank according to this aspect (sixth aspect), a pump is connected to the discharge port formed in the recess of the bottom so that the coolant is pumped out through the discharge port by the pump. Since the discharge port is formed in the recess that has a reduced volume, a strong flow of coolant is generated in the recess when the coolant is pumped out through the discharge port. Therefore, foreign objects (machining chips and sludge) accumulating on the bottom, including the recess, are sucked out together with the flow of coolant. Thereby, the bottom of the coolant tank is kept clean.

0021 In each of the coolant tanks according to the first through sixth aspects, the bottom and the side wall may be made of resin. Manufacturing the coolant tank by resin molding makes it easy to manufacture the coolant tank that has an uneven and complicated structure.

### Advantageous Effects of Invention

0022 In the coolant tank according to the present invention, the side wall has the plurality of outwardly protruding protrusions formed thereon and therefore has a surface area increased by the protrusions as compared to a conventional coolant tank which has no protrusion formed thereon. Therefore, heat exchange between the coolant in the coolant tank and the atmosphere through the side wall of the coolant tank is facilitated as compared to the conventional coolant tank, so that the coolant in the coolant tank is maintained at a lower temperature than that in the conventional coolant tank.

0023 When this coolant tank is provided for a machine tool to supply a coolant into the machine tool, the coolant is heated up by machining heat; however, the heated coolant is cooled down in the coolant tank to each a temperature lower than that in the case of using the conventional coolant tank. Consequently, occurrence of thermal deformation in the machine tool due to such a heated coolant is suppressed as compared to the case of using the conventional coolant tank.

### Brief Description of Drawings

0024
FIG. 1 is a perspective view illustrating a machine tool including a coolant tank according to an embodiment of the present invention;
FIG. 2 is a perspective view illustrating a coolant supply device having the coolant tank according to the embodiment;

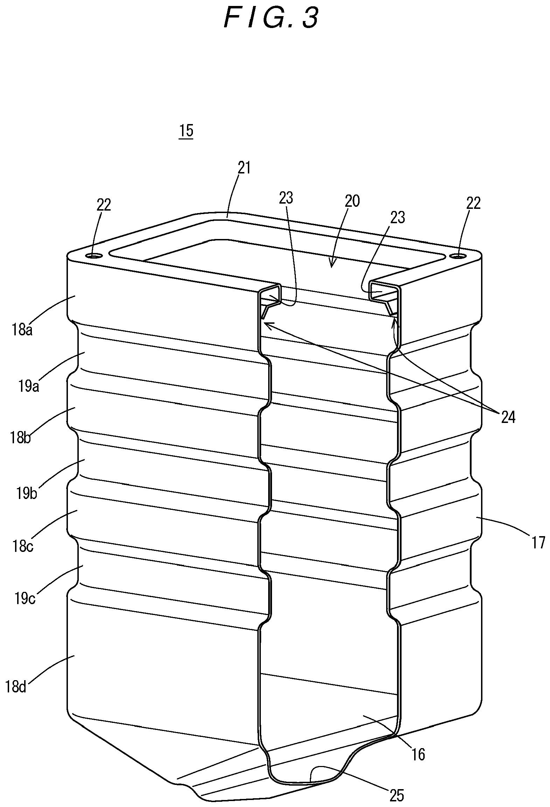

FIG. 3 is a partially cut-away perspective view of the coolant tank according to the embodiment;
FIG. 4 is a plan view of the coolant tank according to the embodiment;
FIG. 5 is a plan view of a coolant tank according to another embodiment of the present invention; and
FIG. 6 is a front view of the coolant tank according to the other embodiment as viewed in the direction of arrow A in FIG. 5, with a bottom portion thereof omitted.

### Description of Embodiments

0025 Hereinafter, a specific embodiment of the present invention will be described with reference to the drawings.

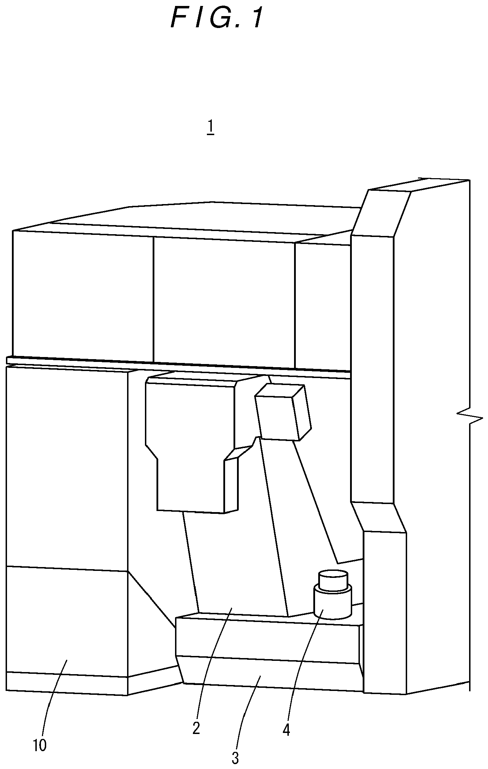

0026 As illustrated in FIG. 1, a machine tool 1 in this embodiment is, by way of example, an NC lathe that includes a primary coolant tank 3, a chip conveyor 2 arranged in the primary coolant tank 3, and a coolant supply device 10.

0027 The chip conveyor 2 has an open receiving part that is connected to a machining area of the NC lathe. A coolant supplied into the machining area of the NC lathe and machining chips produced in machining are collected into the chip conveyor 2 through the receiving part. The collected machining chips are conveyed by a conveyor and discharged into an external appropriate chip box.

0028 On the other hand, the coolant collected in the chip conveyor 2 flows into the primary coolant tank 3 through an opening formed in a side of the chip conveyor 2. The coolant in the primary coolant tank 3 is transported to the coolant supply device 10 by a primary pump 4 attached to the primary coolant tank 3.

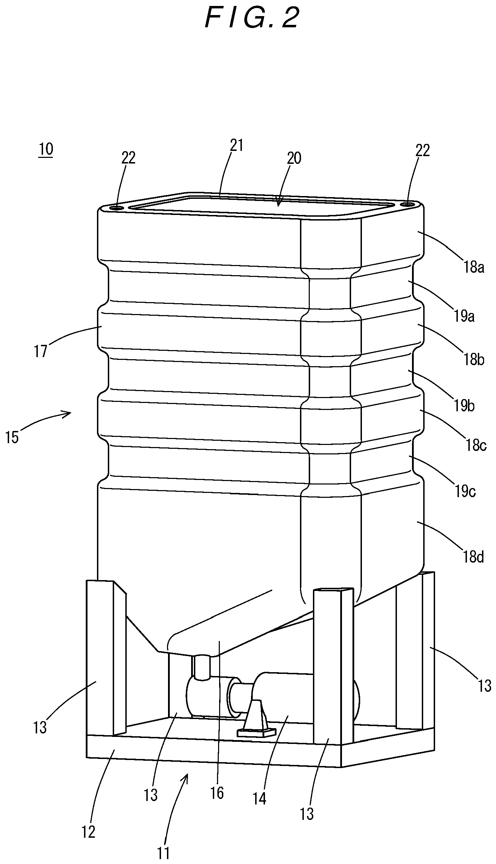

0029 As illustrated in FIG. 2, the coolant supply device 10 has a secondary coolant tank 15, a support 11 supporting the secondary coolant tank 15, and a secondary pump 14. The support 11 consists of a base 12 having a rectangular shape in plan view and four pillars 13 extending upright from the four corners of the base 12. The secondary coolant tank 15 is supported by the four pillars 13.

0030 The secondary coolant tank 15 is composed of a vertically long, substantially rectangular parallelepiped tank having a bottom 16 and tubular side wall 17 extending upright from an outer peripheral edge of the bottom 16, and has an opening 20 in the top thereof. The side wall 17 has a plurality of outwardly protruding protrusions 18a, 18b, 18c, and 18d formed thereon at predetermined intervals in the vertical direction. The protrusions 18a, 18b, 18c, and 18d are each formed along the circumferential direction and each have an annular shape in plan view. Consequently, constricted concave places 19a, 19b, and 19c are formed along the circumferential direction between the protrusions 18a and 18b, between the protrusions 18b and 18c, and between the protrusions 18c and 18d, respectively.

0031 The side wall 17 has at an upper edge 21 thereof a hollow conduit 23 formed along a peripheral edge of the upper edge 21 and has between an inner peripheral surface thereof and a bottom portion of the conduit 23 an opening 24 formed continuously or intermittently along the circumferential direction. The upper edge 21 has pouring ports 22 formed therein that lead to the conduit 23. The pouring ports 22 are connected to the primary pump 4, so that the coolant pumped up from the primary coolant tank 3 by the primary pump 4 is transported into the secondary coolant tank 15 through an appropriate conduit and then the pouring ports 22.

0032 The bottom 16 of the secondary coolant tank 15 has an oblong recess 25 formed therein that is inclined downward from one side to the other side along a diagonal line of the bottom 16. The recess 25 has a discharge port 26 formed in a portion near the lowest point thereof. The discharge port 26 is connected to the secondary pump 14. The coolant in the secondary coolant tank 15 is pumped up by the secondary pump 14 and supplied into the machining area of the NC lathe through an appropriate conduit.

0033 In the machine tool 1 having the above-described configuration, as described above, the coolant in the secondary coolant tank 15 is pumped up by the secondary pump 14 and supplied into the machining area of the NC lathe through the appropriate conduit. The coolant supplied into the machining area is, for example, ejected toward a tool and a workpiece for machining. The coolant cools down the tool and the workpiece by heat exchange during machining, so that the coolant absorbs machining heat and thereby heats up.

0034 The coolant supplied in the machining area of the NC lathe is collected, together with machining chips produced in machining, into the chip conveyor 2 through the receiving part of the chip conveyor 2. The coolant is separated from the machining chips in the chip conveyor 2 and collected into the primary coolant tank 3 through the opening formed in the side of the chip conveyor 2.

0035 On the other hand, the coolant in the primary coolant tank 3 is pumped up by the primary pump 4 and transported into the secondary coolant tank 15 through the appropriate conduit and the pouring ports 22 formed in the upper edge 21 of the secondary coolant tank 15.

0036 The coolant poured through the pouring ports 22 flows into the hollow conduit 23 formed along the peripheral edge of the upper edge 21 of the side wall 17 and flows out downward through the opening 24 formed at the bottom portion of the conduit 23 while flowing in the conduit 23. The coolant flows down along the inner surface of the side wall 17 and is thereby stored in the secondary coolant tank 15. In this process, the coolant is cooled down by heat exchange with the side wall 17 in the course of flowing down along the inner surface of the side wall 17, and simultaneously serves to wash off machining chips and sludge adhering to the inner surface of the side wall 17.

0037 The side wall 17 of the secondary coolant tank 15 has the plurality of outwardly protruding protrusions 18a, 18b, 18c, and 18d and the constricted concave places 19a, 19b, and 19c between them formed thereon; therefore, the side wall 17 of the secondary coolant tank 15 has a surface area increased by the formation of the protrusions 18a, 18b, 18c, and 18d as compared to conventional coolant tanks.

0038 Therefore, heat exchange between the coolant stored in the secondary coolant tank 15 and the atmosphere through the side wall 17 of the secondary coolant tank 15 is facilitated as compared to the conventional coolant tanks, so that the coolant in the secondary coolant tank 15 reaches a lower temperature than those in the conventional coolant tanks. The coolant maintained at such a lower temperature is pumped up by the secondary pump 14 and supplied into the machining area of the NC lathe through the appropriate conduit.

0039 Thus, in the coolant supply device 10 in this embodiment, the coolant having been heated up by machining heat is cooled down in the secondary coolant tank 15 to reach a temperature lower than those in the cases of using the conventional coolant tanks. Consequently, occurrence of structural thermal deformation in the NC lathe due to such a heated coolant is suppressed as compared to the cases of using the conventional coolant tanks. Further, the secondary coolant tank 15 has an increased structural strength since the side wall 17 has the plurality of protrusions 18a, 18b, 18d, and 18d formed thereon.

0040 Further, the secondary coolant tank 15 in this embodiment has the recess 25 with a reduced volume formed in the bottom 16 thereof, and the recess 25 has the discharge port 28 formed therein that is connected to the secondary pump 14. This configuration generates a strong flow of coolant in the recess 25 when the coolant is pumped out through the discharge port 28 by the secondary pump 14. This flow of coolant serves to suck out machining chips and sludge accumulating on the bottom 16. Thereby, the inside of the secondary coolant tank 15 is kept clean.

0041 Further, the secondary coolant tank 15 in this embodiment has a vertically long rectangular parallelepiped shape. This allows the coolant storage capacity of the secondary coolant tank 15 to be increased. In the field of machine tools, machining under higher loads has been enabled by improvements in the structural performance of machine tools and in the performance of tools in recent years. Accordingly, the amount of heat generated by machining is increased and the amount of machining chips per a unit time is also increased, which leads to increase in the amount of coolant used for cooling the tool and the workpiece and washing off machining chips. Therefore, it is necessary to increase the coolant tank capacity. However, a conventional coolant tank which is small in height has difficulty in increasing its capacity and has a problem that increase in capacity leads to increase in installation space. The coolant supply device 10 in this embodiment can be increased in coolant storage capacity without increase in installation space.

0042 Note that the secondary coolant tank 15 can be manufactured by resin molding. Manufacturing the secondary coolant tank 15 by resin molding enables the secondary coolant tank 15 that has an uneven and complicated structure to be manufactured easily and inexpensively. Examples of the appliable resin include polyethylene, polycarbonate, fluoro-rubber, and nitrile rubber.

0043 Above has been described an embodiment of the present invention. However, it should be noted that the present invention is not limited to the above-described embodiment and can be implemented in other manners.

0044 For example, the size and number of the protrusions 18a, 18b, 18c, and 18d in the above-described embodiment are just an example. The size and number of the protrusions 18a, 18b, 18c, and 18d are not limited to those mentioned above and are appropriately determined according to the cooling effect.

0045 Further, the protrusions 18a, 18b, 18c, and 18d in the above-described embodiment have in plan view an annular shape formed along the circumferential direction. However, the present invention is not limited to protrusions having such a shape, and island-shaped protrusions may be formed on the side wall 17. Such protrusions also increase the surface area of the side wall 17 so that the effect of cooling down the coolant to be stored in the secondary coolant tank 15 is increased.

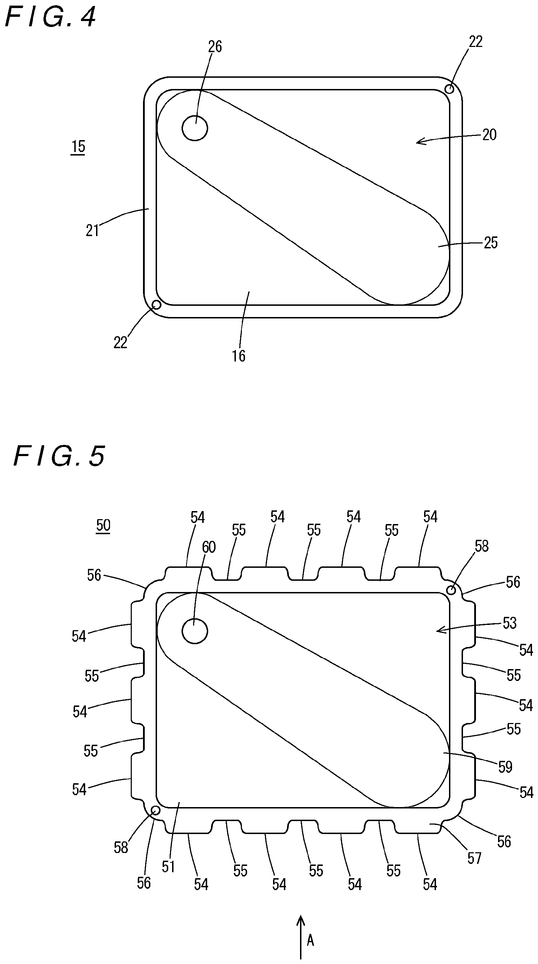

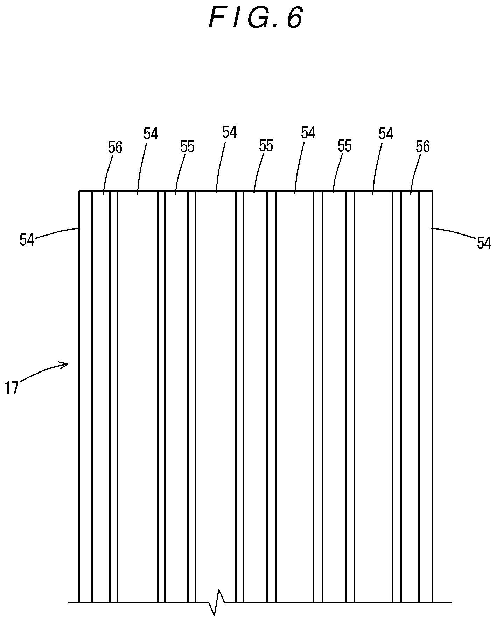

0046 Alternatively, the secondary coolant tank may be formed to have a shape as illustrated in FIGS. 5 and 6. FIG. 5 is a plan view of a secondary coolant tank 50 according to this embodiment and FIG. 6 is a front view of the secondary coolant tank 50 with a bottom portion thereof omitted.

0047 As illustrated in FIGS. 5 and 6, the secondary coolant tank 50 has protrusions 54 that are shaped differently from those of the above-described secondary coolant tank 15. Except for this, the secondary coolant tank 50 has the same structure as the above-described secondary coolant tank 15.

0048 The secondary coolant tank 50 is composed of a vertically long, substantially rectangular parallelepiped tank having a bottom 51 and tubular side wall 52 extending upright from an outer peripheral edge of the bottom 51, and has an opening 53 in the top thereof. The side wall 52 has a plurality of outwardly protruding protrusions 54 formed thereon at predetermined intervals in the circumferential direction. The protrusions 54 are each formed along the vertical direction so that they are formed in a stripe pattern as viewed from the front. Consequently, the side wall 52 has stripe-shaped concave places 55 along the vertical direction formed between the protrusions 54 on the flat surfaces thereof and has stripe-shaped concave places 56 along the vertical direction formed at the four corners thereof.

0049 The side wall 52 has at an upper edge 57 thereof a hollow conduit (not illustrated; having the same structure as the conduit 23 in the above-described embodiment) formed along a peripheral edge of the upper edge 57 and has between an inner peripheral surface thereof and a bottom portion of the conduit (not illustrated) an opening (not illustrated; having the same structure as the opening 24 in the above-described embodiment) formed continuously or intermittently along the circumferential direction. The upper edge 57 has pouring ports 58 formed therein that lead to the conduit (not illustrated). The pouring ports 58 are connected to the primary pump 4, so that the coolant pumped up from the primary coolant tank 3 by the primary pump 4 is transported into the secondary coolant tank 50 through an appropriate conduit and then the pouring ports 58.

0050 The bottom 51 of the secondary coolant tank 50 has an oblong recess 59 formed therein that is inclined downward from one side to the other side along a diagonal line of the bottom 51. The recess 59 has a discharge port 60 formed in a portion near the lowest point thereof. The discharge port 60 is connected to the secondary pump 14. The coolant in the secondary coolant tank 50 is pumped up by the secondary pump 14 and supplied into the machining area of the NC lathe through an appropriate conduit.

0051 In the secondary coolant tank 50, the coolant poured through the pouring ports 58 flows into the hollow conduit (not illustrated) formed along the peripheral edge of the upper edge 57 of the side wall 52 and flows out through the opening (not illustrated) formed at the bottom portion of the conduit (not illustrated) while flowing in the conduit (not illustrated). The coolant flows down along the inner surface of the side wall 52 and is thereby stored in the secondary coolant tank 50. In this process, the coolant is cooled down by heat exchange with the side wall 52 in the course of flowing down along the inner surface of the side wall 52, and simultaneously serves to wash off machining chips and sludge adhering to the inner surface of the side wall 52.

0052 The side wall 52 of the secondary coolant tank 50 has the plurality of outwardly protruding stripe-shaped protrusions 54 and the stripe-shaped concave places 55 and 56 between them formed thereon; therefore, the side wall 52 of the secondary coolant tank 50 has a surface area increased by the formation of the protrusions 54 as compared to conventional coolant tanks.

0053 Therefore, heat exchange between the coolant stored in the secondary coolant tank 50 and the atmosphere through the side wall 52 of the secondary coolant tank 50 is facilitated as compared to the conventional coolant tanks, so that the coolant in the secondary coolant tank 50 reaches a lower temperature than those in the conventional coolant tanks. Therefore, the coolant maintained at such a lower temperature is pumped up by the secondary pump 14 and supplied into the machining area of the NC lathe through the appropriate conduit.

0054 Thus, with this secondary coolant tank 50 according to this embodiment, the coolant having been heated up by machining heat is cooled down in the secondary coolant tank 50 to reach a temperature lower than those in the cases of using the conventional coolant tanks. Consequently, occurrence of structural thermal deformation in the NC lathe due to such a heated coolant is suppressed as compared to the cases of using the conventional coolant tanks. Further, the secondary coolant tank 50 has an increased structural strength since the side wall 52 has the plurality of protrusions 54 formed thereon.

0055 Further, the secondary coolant tank 50 according to this embodiment also has the recess 59 with a reduced volume formed in the bottom 51 thereof, and the recess 59 has the discharge port 60 formed therein that is connected to the secondary pump 14. This configuration generates a strong flow of coolant in the recess 59 when the coolant is pumped out through the discharge port 60 by the secondary pump 14. This flow of coolant serves to suck out machining chips and sludge accumulating on the bottom 51. Thereby, the inside of the secondary coolant tank 50 is kept clean.

0056 Further, the secondary coolant tank 50 according to this embodiment also has a vertically long rectangular parallelepiped shape; therefore, this secondary coolant tank 50 also can be increased in coolant storage capacity without increase in installation space. Further, the secondary coolant tank 50 also can be manufactured by resin molding as described above. Furthermore, the above-mentioned size and number of the protrusions 54 are just an example. The size and number of the protrusions 54 are not limited to those mentioned above and are appropriately determined according to the cooling effect.

0057 In the above-described embodiments, the side wall 17, 52 has at the upper edge 21, 57 thereof the hollow conduit 23, (not illustrated) formed along the peripheral edge of the upper edge 21, 57 and has between the inner peripheral surface thereof and the bottom portion of the conduit 23, (not illustrated) the opening 24, (not illustrated) formed continuously or intermittently along the circumferential direction, and the upper edge 21, 57 has the pouring ports 22, 58 formed therein that lead to the conduit 23, (not illustrated). This configuration is preferable but not essential in the present invention. In stead of this configuration, the coolant supplied by the primary pump 14 may be directly poured into the secondary coolant tank 15, 50 through the opening 20, 53.

0058 If increase in coolant storage capacity is not desired, the secondary coolant tank 15, 50 may have a horizontally long rectangular parallelepiped shape. Further, the primary coolant tank 3 may have the protrusions 18a, 18b, 18c, and 18d or the protrusions 54 formed thereon.

0059 As already mentioned above, the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within a scope equivalent to the scope of the claims.

### Reference Signs List

0060
- 1: Machine tool
- 2: Chip conveyor
- 3: Primary coolant tank
- 4: Primary pump
- 10: Coolant supply device
- 11: Support
- 14: Secondary pump
- 15: Secondary coolant tank
- 16: Bottom
- 17: Side wall
- 18a, 18b, 18c, 18d: Protrusion
- 19: Concave place
- 21: Upper edge
- 22: Pouring port
- 23: Conduit
- 24: Opening
- 25: Recess
- 26: Discharge port

## Claims

1. A coolant tank for storing a coolant, comprising:
a bottom; and
a tubular side wall extending upright from an outer peripheral edge of the bottom, **characterized in that** the side wall has a plurality of outwardly protruding protrusions formed thereon at predetermined intervals in a vertical direction.

2. The coolant tank according to claim 1, **characterized in that** the protrusions are annularly formed along a circumferential direction of the side wall.

3. A coolant tank for storing a coolant, comprising:
a bottom; and
a tubular side wall extending upright from an outer peripheral edge of the bottom, **characterized in that** the side wall has a plurality of outwardly protruding protrusions formed thereon at predetermined intervals in a circumferential direction.

4. The coolant tank according to claim 1, **characterized in that** the protrusions are formed in a stripe pattern along a vertical direction.

5. The coolant tank according to any one of claims 1 to 4, **characterized in that**:
the side wall has at an upper edge thereof a hollow conduit formed along a peripheral edge of the upper edge and has between an inner peripheral surface thereof and a bottom portion of the conduit an opening formed continuously or intermittently along a circumferential direction of the side wall; and
the upper edge has a pouring port formed therein leading to the conduit.

6. The coolant tank according to any one of claims 1 to 5, **characterized in that** the bottom has a recess formed therein and the recess has a discharge port formed therein connected to a pump.

7. The coolant tank according to any one of claims 1 to 6, **characterized in that** the bottom and the side wall are made of resin.
